(19) Europäisches Patentamt
European Patent Office
Office européen des brevets

(11) **EP 4 495 829 A1**

(12) **EUROPEAN PATENT APPLICATION**

(43) Date of publication:
**22.01.2025 Bulletin 2025/04**

(21) Application number: 23186289.7

(22) Date of filing: **19.07.2023**

(51) International Patent Classification (IPC):
**G06N 3/045** (2023.01) **G06N 3/09** (2023.01)

(52) Cooperative Patent Classification (CPC):
**G06N 3/09; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mastercard International Incorporated Purchase NY 10577 (US)**

(72) Inventors:
• **Yu, Yaxuan**
 **Dublin, D18 W903 (IE)**
• **Tran, Ngoc Minh**
 **Dublin, D15XRN0 (IE)**

(74) Representative: **Barker Brettell LLP**
 **100 Hagley Road**
 **Edgbaston**
 **Birmingham, West Midlands B16 8QQ (GB)**

(54) **BUILD AI MODELS WITH HEAVY NOISE DATA**

(57) There is provided a computer implemented method for training and validating a machine learning model. The method comprises receiving a dataset (111) comprising multiple datapoints, wherein each datapoint has associated with it one or more features, determining a noise level of each datapoint of the dataset (111), and categorising each datapoint of the dataset (111) into one of a plurality of data subsets (113-123), said categorising such that each data subset (113-123) comprises datapoints having a specific range of noise level, wherein the specific range of noise level is different for each subset (113-123). The method further comprises training a plurality of machine learning models (125-135), each machine learning model of the plurality of machine learning models (125-135) is trained on a specific one of the data subsets (113-123), and validating an output of each of the trained plurality of machine learning models (125-135) to determine a performance of the trained machine learning models (125-135) through comparing the output to a predetermined value.

Fig 1

EP 4 495 829 A1

**Description**

<u>Field</u>

The present invention relates to methods and systems for training and validating a machine learning model and the application of these machine learning models. In particular, the method and systems take into account the noise level of the data used for training and create models appropriate for certain range of noise levels in the data such that the models can be used to make predictions.

<u>Background</u>

When training machine learning models on datasets the data that may be used may be incomplete. For instance, the data used to train the machine learning models may have features (otherwise called attributes) missing for certain datapoints.

This can particularly be a problem when the datasets are based on several sources of data, which in some instances may come from external third parties. Due to the variety of these data sources, combining them to form unified training data easily results in lots of data features that are unavailable. This is particularly the case when taking data from networks, such as for instance, when using machine learning models to detect and identify fraud. Data cleansing is one technique that can help fill in these unavailable features with default (but faked) values, but at the same time this may also introduce additional noise into the unified training data.

Defaulting values for unavailable attributes may augment the noise in the unified training data even more. Consequently, the quality of the trained model can be seriously affected by these techniques. Therefore, it is desirable to have an efficient approach to remove or reduce noise in the unified data to obtain a reliable and thorough trained model.

A simple approach that may be taken is to remove all data points in the unified dataset where one or more features are unavailable. However, this approach is not without its own disadvantages. For instance, this will significantly reduce the size of the unified dataset and will waste a lot of important and valuable data, which may sometimes be obtained from third party vendors, thus rendering the training of the machine learning model, and thus training of the predictions from the model, suboptimal. In addition, current noise correction methods are computationally expensive using vast computer resources.

The present invention sets out to alleviate these problems relating to inefficiencies in the training of machine learning models which arise from excess noise in machine learning data..

<u>Summary of Invention</u>

According to a first aspect there is provided a computer implemented method for training and validating a machine learning model, the method comprising; receiving a dataset comprising multiple datapoints, wherein each datapoint has associated with it one or more features; determining a noise level of each datapoint of the dataset; categorising each datapoint of the dataset into one of a plurality of data subsets, said categorising such that each data subset comprises datapoints having a specific range of noise level, wherein the specific range of noise level is different for each subset; training a plurality of machine learning models each machine learning model of the plurality of machine learning models trained on a specific one of the data subsets; validating an output of each of the trained plurality of machine learning models to determine a performance of the trained machine learning models through comparing the output to a predetermined value.

In some arrangements, the method may further comprise, if from said comparing it is determined that the performance of any of the trained and validated machine learning models are not within a desired range of the predetermined value: i) updating the data subsets, to obtain updated data subsets, through: re-determining a noise level of the datapoints of the dataset; and if the noise level of a specific datapoint has changed: recategorising the specific datapoint into a different data subset of the plurality of data subsets if it does not fall within the range of noise level associated with the data subset to which it was previously categorised; ii) re-training the machine learning models that were not within the desired range of the predetermined value on the updated data subsets, wherein the machine learning models, that were not within the desired range of the predetermined value on the updated data subsets, are each retrained on a specific updated data subset having the specific range of noise level that the machine learning model was initially trained on; iii) validating an output of the retrained machine learning models, to determine a performance of the re-trained machine learning models through comparing the outputs to a predetermined value; if from said comparing it is determined that the performance of one of the machine learning models obtained from the re-training is not within a desired range of the predetermined value repeating steps i) to iii).

It has been found that by classifying the training data into subsets based on noise level, and by training a specific machine learning model on each subset, trained models that provide improved predictions can be output compared to a single model that is trained on data having various amounts of noise within the training data set.

Advantageously, this enables all of the data points to be utilised in training such that information contained within this data is not lost. Furthermore, this reduces the computational resources required as conventional noise correction techniques, which require large computational resources, and lots of heavy data processing are not required. This helps provide an improved performance of the trained machine learning models.

The predetermined value may be a known value. It may be a value that the model would be expected to return after validation. By comparing the output (predicted by the machine learning model) to this value, it is possible to determine the performance of the model. The desired range of the predetermined value may be within a certain percentage range of said value. For instance, it may be 1%, 2%, 5%, 10%, for example. In other arrangements the desired range may be the predetermined value (i.e. they must match). Alternatively, or in addition, the desired range may be closer than the output from the previous trained machine learning model iteration.

Re-determining a noise level of the datapoints may be carried out for each datapoint in the dataset. Alternatively, it may be done only for datapoints that fall within the data subsets on which the trained and validated machine learning models that do not provide an output within a desired range of the predetermined value, have been trained.

The re-training may be carried out for each of the trained machine learning models if from said comparing it is determined that the performance of any of the trained and validated machine learning models are not within a desired range of the predetermined value. Alternatively, the retraining may only be carried out on the machine learning models whose performance are not within a desired range of the predetermined value.

In some arrangements, repeating steps i) to iii) may be carried out until, from said comparing, it is determined that the performance of the machine learning model obtained from the re-training is within a desired range of the predetermined value. By having a number of different iterations this may enable the models to be subsequently re-trained as the categorisation of the data points into the data subsets are updated. In other arrangements, the repeating may be carried out a fixed number of times. For instance, the fixed number of times may be any number. For instance, 1,2,3, 4, ... 10, 100, for instance.

Preferably, determining the noise level of a datapoint may be based on the feature availability of each feature of the data point, and/or the feature importance. The feature importance is a score assigned to each feature based on its importance to obtain the output. The feature availability is whether a particular feature is present for a specific datapoint.

The feature availability may have assigned a value of either 1 or 0. Where 1 indicates that the feature is present for that datapoint and 0 indicates that the feature is not present. The feature importance may be assigned a value between 1 or 0. A feature importance of 1 indicates that the feature is very important and a feature importance of 0 indicates the feature is not important. The feature importance may have a value between 0 and 1.

The feature importance may be the same for each datapoint of the data subset. However, the feature availability will be specific to the particular data point to which it relates.

The method may further comprise: assigning a feature importance to each feature prior to the initial training, and after the training: computing an updated feature importance for each feature based on the output of each of the plurality of machine learning models. Advantageously, in this way the noise level of the datapoint is dynamically recalculated after each training. This enables the re-categorisation of the data points into the appropriate data subset. By having this re-categorisation performance of the trained models can be improved as the data they are trained on is dynamically updated.

The feature importance may be initially set to be the same for each feature prior to the initial training. For instance, the feature importance may be set to 1 prior to the initial training. In other arrangement, the feature importance may be set to any value between 0 and 1, such as 0.5. After the training an updated feature importance is provided by the trained model such that each feature importance can be adjusted accordingly. In other arrangements, the initial feature importance may be assigned based on a prediction as to which features are likely to be the most important. The feature importance are then updated accordingly. For instance, it may be predicted that feature x has a greater importance than feature y, so feature x may be assigned a greater feature importance than feature y.

The step of re-determining a noise level may be based on the updated feature importance. As the feature importance changes for a datapoint the noise level of the datapoint may change. In this way, redetermining a noise level of the datapoints comprises said computing an updated feature importance for each feature.

In some arrangements, for n features, the noise level of a datapoint may be determined as

$$Noise\ level\ (\%) = [\ 1 - \sum_{i=1}^{n}(FAi * FIi)/\sum_{i=1}^{n}(FIi)] * 100$$

wherein $n$ is the number of features, $i = 1, 2, 3, \ldots$, where $FAi$ is the feature availability for feature i, and $FIi$ is the feature importance for feature $i$. As can be seen the noise level is directly related to the feature importance and feature availability.

The method may further comprise: if upon said comparing it is determined that the performance of any of the trained and validated machine learning models are within a desired range of the predetermined value: applying at least one of the plurality of trained machine learning models to a dataset to be assessed; providing an output from the at least one of the plurality of trained machine learning models (from said applying); taking action based on the output. Advantageously, the plurality of trained machine learning models can be used for predictions on data to be assessed. Data to be assessed is preferably data that the fully trained machine learning models (i.e. one that meets the desired performance from validation) is intended to be used upon to generate predictions/outputs. This may be the machine learning models after being retrained through multiple iterations of re-training.

Taking action based on the output may be taking any action that is desired based on the output.

Said applying may comprise applying one of the plurality trained machine learning models to a single data point of the dataset to be assessed. In some arrangements the dataset to be assessed may comprise a single data point. In other arrangements it may comprise multiple datapoints.

Preferably, applying at least one of the plurality of trained machine learning models to a dataset to be assessed may further comprise: determining a noise level of each datapoint of the dataset to be assessed; categorising each datapoint of the dataset to be assessed into one of a plurality of data subsets, said categorising such that each data subset comprises datapoints having a specific range of noise level, wherein the specific range of noise level is different for each subset; applying one of the plurality of trained machine learning models to a specific one of the data subsets to provide an output.

In this way, all of the data can be used without the need to apply noise filling, or correction methods, or discarding data where certain features are not present. The method enables the dataset to be assessed and to be split into the different data subsets depending on noise level. The machine learning models applied to each data subset are those that are trained on a data subset having the same range of noise level. This enables an improved output (e.g. prediction) from each machine learning model as the models are trained to handle that noise level of data.

The number and noise levels of the data subsets (of the dataset to be assessed) are the same as those as the data subsets determined when training the model (i.e., when applied to the dataset). In other words, the range of noise levels of the data points that the data subsets (of the dataset to be assessed) contain are the same as for the data subsets determined when training the model (i.e., when applied to the dataset). As outlined above, the dataset to be assessed may comprise multiple data points. However, in some arrangements it may comprise a single data point. When it comprises a single datapoint the applying of one of the plurality of trained machine learning models is the trained model that has been trained on the data subset having the same noise level of the single data point to be assessed.

In some arrangements, the dataset may be a dataset relating to network activity, and the machine learning models may be for detecting fraudulent events in the network, wherein the method may further comprise: applying at least one of the plurality of trained machine learning models to a dataset to be assessed to determine the presence of fraudulent events; providing an output from the at least one of the plurality of trained machine learning models the output indicating the detection of a fraudulent event in a network from the dataset to be assessed; taking corrective action based on the output. In this way, the machine learning model of the present invention may be trained and validated such that it provides an improved prediction of a fraudulent event.

Applying at least one of the plurality of trained machine learning models to a dataset to be assessed to determine the presence of fraudulent events, may be carried out once the machine learning models are within a desired range of the predetermined value (i.e., the training and validation steps are completed).

Taking corrective action may involve taking action to prevent the fraudulent event from happening again. In other arrangements, it may involve alerting a third party of the fraudulent event. It may further involve reversing the outcome of the fraudulent event. For instance, this may involve returning funds.

In other arrangements the machine learning model may be for determining credit risk scoring. The output may provide an indication of a credit risk.

Preferably, validating may comprise using a validation dataset to provide an output of the machine learning model and comparing the output provided by the machine learning model to predetermined value. The validation provides a test of how accurate the machine learning model is performing. The validation dataset is a dataset with which it is known what the outcome should be with a fully trained machine learning model.

Preferably, validating an output of the re-trained machine learning models may further comprise: comparing to the performance of the machine learning model prior to the re-training, and if the output of the re-trained model is closer to the predetermined value than the output of the trained model carrying out steps i) to iii), else taking the trained machine learning model prior to the re-training as a final trained model.

In this way, if the previously trained machine learning model provides a better performance than the re-trained model, the re-trained model may be discarded. Such a step may be carried out for each iteration of training and validation. In this way, the best performing machine learning models may be arrived at. Such an approach may be taken for each of the plurality of machine learning models.

Taking the trained machine learning model prior to the re-training as a final trained model may further comprise: adding a random number to a feature importance list of the features of the dataset; retraining the machine learning model on the updated dataset; validating an output of the machine learning model obtained from the retraining after adding the random number, to determine a performance of the re-trained machine learning model after adding the random number through comparing the output to a predetermined value; if the output of the re-trained model after adding the random number is closer to the predetermined value than the output of the model prior to adding the random number taking the re-trained model after adding the random number as the final trained model.

In this way, even if the best performing machine learning model has been found through the training and validation by adding on random numbers to the feature importance list, it can be determined if the true optimum machine learning model has been arrived at. If it is determined that through adding the random numbers that the performance is not improved, the machine learning model with the small random numbers is discarded and the machine learning model prior to adding the random numbers is taken as the final trained model. If the performance is improved, the improved machine learning model is taken as the final model.

Preferably, there may be the same number of plurality of data subsets as there are plurality of machine learning models. By having the same number of data subsets as machine learning models the entire dataset can be utilised without wastage of data. For instance, in this way, a machine learning model is trained on each of the data subsets. In other arrangements, there may be less machine learning models than data subsets. For instance, the data subset containing data points with the highest amount of noise may be discarded.

According to a further aspect there is provided a system for training and validating a machine learning model, the system configured to: receive a dataset comprising multiple datapoints, wherein each datapoint has associated with it one or more features; determine a noise level of each datapoint of the dataset; categorise each datapoint of the dataset into one of a plurality of data subsets, said categorising such that each data subset comprises datapoints having a specific range of noise level, wherein the specific range of noise level is different for each subset; train a plurality of machine learning models each machine learning model of the plurality of machine learning models trained on a specific one of the data subsets; validate an output of each of the trained plurality of machine learning models to determine a performance of the trained machine learning models through comparing the output to a predetermined value.

The system may be further configured such that if from said comparing it is determined that the performance of any of the trained and validated machine learning models are not within a desired range of the predetermined value: i) update the data subsets, to obtain updated data subsets, through: re-determine a noise level of the datapoints of the dataset; and if the noise level of a specific datapoint has changed: recategorise the specific datapoint into a different data subset of the plurality of data subsets if it does not fall within the range of noise level associated with the data subset to which it was previously categorised; ii) re-train the machine learning models that were not within the desired range of the predetermined value on the updated data subsets, wherein the machine learning models, that were not within the desired range of the predetermined value on the updated data subsets, are each re-trained on a specific updated data subset having the specific range of noise level that the machine learning model was initially trained on; iii) validate an output of the re-trained machine learning models, to determine a performance of the re-trained machine learning models through comparing the outputs to a predetermined value; if from said comparing it is determined that the performance of one of the machine learning models obtained from the re-training is not within a desired range of the predetermined value repeat steps i) to iii).

The system may be configured to perform any of the above-mentioned method steps according to the above aspect.

According to a further aspect there is provided a non-transitory computer-readable medium comprising instructions which, when executed by a computer, cause the computer to: receive a dataset comprising multiple datapoints, wherein each datapoint has associated with it one or more features; determine a noise level of each datapoint of the dataset; categorise each datapoint of the dataset into one of a plurality of data subsets, said categorising such that each data subset comprises datapoints having a specific range of noise level, wherein the specific range of noise level is different for each subset; train a plurality of machine learning models each machine learning model of the plurality of machine learning models trained on a specific one of the data subsets; validate an output of each of the trained plurality of machine learning models to determine a performance of the trained machine learning models through comparing the output to a predetermined value.

The computer-readable medium may be further configured to such that if from said comparing it is determined that the performance of any of the trained and validated machine learning models are not within a desired range of the predetermined value the computer is configured to: i) update the data subsets, to obtain updated data subsets, through: re-determine a noise level of the datapoints of the dataset; and if the noise level of a specific datapoint has changed: recategorise the specific datapoint into a different data subset of the plurality of data subsets if it does not fall within the range of noise level associated with the data subset to which it was previously categorised; ii) re-train the machine learning models that were not within the desired range of the predetermined value on the updated data subsets, wherein the machine learning models, that were not within the desired range of the predetermined value on the updated data subsets, are each re-trained on a specific updated data subset having the specific range of noise level that the machine learning model was initially trained on; iii) validate an output of the re-trained machine learning models, to determine a performance of the re-trained machine learning models through comparing the outputs to a predetermined value; if from said comparing it is determined that the performance of one of the machine learning models obtained from the re-training is not within a desired range of the predetermined value repeat steps i) to iii).

The computer-readable medium may be configured to cause the computer to perform any of the above-mentioned method steps according to the above aspect.

According to a further aspect there is provided a computer program product comprising instructions which, when the program is executed by a computer, cause the computer to receive a dataset comprising multiple datapoints, wherein each datapoint has associated with it one or more features; determine a noise level of each datapoint of the dataset; categorise each datapoint of the dataset into one of a plurality of data subsets, said categorising such that each data subset comprises datapoints having a specific range of noise level, wherein the specific range of noise level is different for each subset; train a plurality of machine learning models each machine learning model of the plurality of machine learning models trained on a specific one of the data subsets; validate an output of each of the trained plurality of machine learning models to determine a performance of the trained machine learning models through comparing the output to a predetermined value.

The computer program product may be further configured to such that if from said comparing it is determined that the performance of any of the trained and validated machine learning models are not within a desired range of the predetermined value the computer is configured to: update the data subsets, to obtain updated data subsets, through: re-determine a noise level of the datapoints of the dataset; and if the noise level of a specific datapoint has changed: recategorise the specific datapoint into a different data subset of the plurality of data subsets if it does not fall within the range of noise level associated with the data subset to which it was previously categorised; ii) re-train the machine learning models that were not within the desired range of the predetermined value on the updated data subsets, wherein the machine learning models, that were not within the desired range of the predetermined value on the updated data subsets, are each re-trained on a specific updated data subset having the specific range of noise level that the machine learning model was initially trained on; iii) validate an output of the re-trained machine learning models, to determine a performance of the re-trained machine learning models through comparing the outputs to a predetermined value; if from said comparing it is determined that the performance of one of the machine learning models obtained from the re-training is not within a desired range of the predetermined value repeat steps i) to iii).

The computer program product may be configured to cause the computer to perform any of the above-mentioned method steps according to the above aspect.

Description of Figures

Figure 1 shows a schematic block diagram of the system for training and validating a machine learning model, according to an aspect of the present invention;

Figure 2 shows a schematic diagram showing the structure of a datapoint showing the corresponding feature importance and feature availability for processing by the noise calculator to determine noise level according to an aspect of the present invention;

Figure 3 shows an algorithm according to an aspect of the present invention for training and tuning the machine learning model;

Figure 4 shows a flow diagram of a computer implemented method for training and validating a machine learning model, according to an aspect of the present invention;

Figure 5 shows a flow diagram of a computer implemented method for re-training and validating a machine learning model, according to an aspect of the present invention; and

Figure 6 shows a data processing device according to aspects of the present disclosure.

Detailed Description

The present invention is directed to a method and system for providing improved trained and validated machine learning models (otherwise known as artificial intelligence or AI models) and the application of these machine learning models on real world systems. In particular, the method and systems take into account the noise level of the data used for training to create machine learning models appropriate for certain range of noise levels in the data. This is achieved by splitting the training data into a plurality of different subsets, each subset comprising data only having a certain range of noise level, with separate machine learning models trained on only data having a certain range of noise level - thereby creating trained machine learning models that have been trained specifically on data having a certain range of noise. When the machine learning models are then used on an actual data set to be analysed, the appropriate machine learning model can be used based on the noise level of the data in the actual data set to be analysed. This provides improved outcomes and predictions from these machine learning models as they have been trained on data having the same/similar noise level without having to discard useful data or use noise removal techniques.

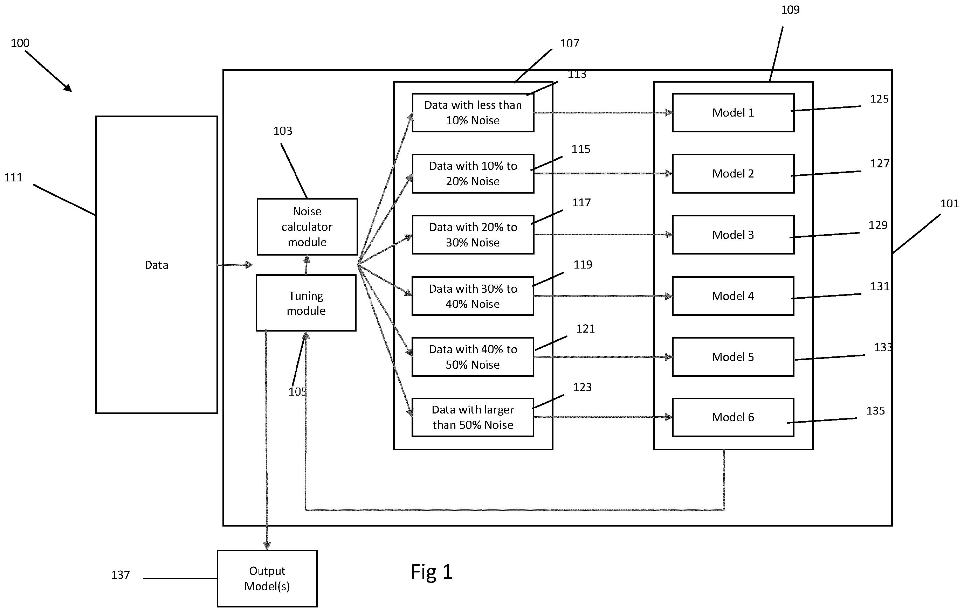

Figure 1 shows a schematic block diagram of a system 100 for training and validating a machine learning model according to an aspect of the present invention. Figure 1 also shows the modelling process. The system 100 comprises a server 101 having modules for performing the methods of the present invention. The server 101 comprises noise calculator module 103 and tuning module 105. The server further comprises data categorisation module 107 shown in communication noise calculator module 103 and tuning module 105. The server also comprises training module 109 shown in communication with a data categorisation module 107. Although particular communications between these modules is shown in Figure 1, each of these modules may be in communication with each of the other modules. In addition, although these modules are shown on a single server 101 this need not be the case. Each module may be located on one, or more, separate servers to each other.

Dataset 111 is shown. The dataset 111 may be stored in one or more databases (not shown). Dataset 111 is the data used for training the machine learning models and can otherwise be referred to as the training dataset. Dataset 111 is the initial input into the modelling process. The dataset 111 is comprised of multiple datapoints.

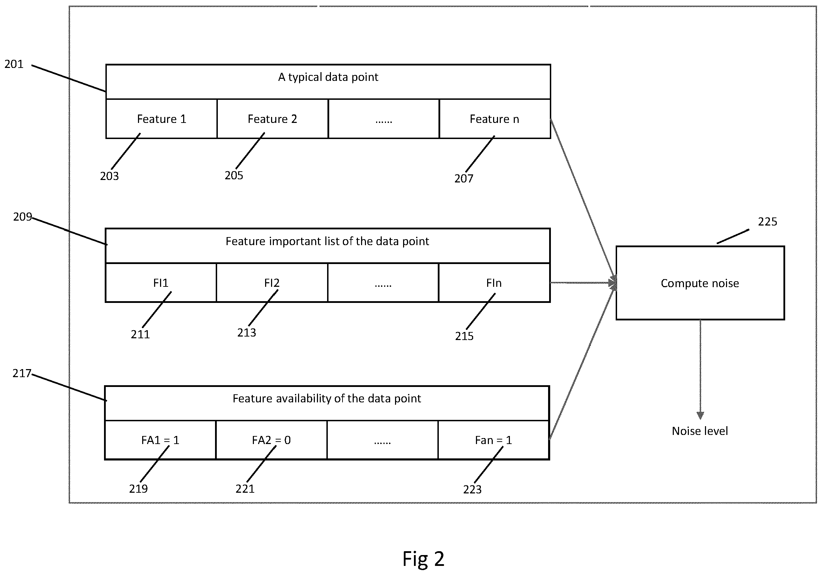

Figure 2 shows a schematic diagram showing the structure of a datapoint 201 of dataset 111. As can be seen the datapoint 201 has multiple features 203-207. This is represented by Feature 1 203, Feature 2 205, and Feature n 207. The features (otherwise known as attributes) are a measurable piece of data that can be used for analysis associated with the data point.

The dataset 111 is input to the noise calculator model 103. The noise calculator model 103 then assigns metadata to the data prior to the training. Specifically, the noise calculator model assigns feature importance and feature availability. The feature importance is a score assigned to each feature based on its importance to obtain the output. The feature availability is whether a particular feature is present for a specific datapoint.

As can be seen in Figure 2 the datapoint 201 has a corresponding feature importance values 209. Each feature 203-207 has a corresponding feature importance. Feature importance FI1 211 is associated with Feature 1 203, feature importance FI2 213 is associated with Feature 2 205, and feature importance FIn 215 is associated with Feature n 207. The feature importance is not unique to the specific datapoint and will be the same for each datapoint.

As can also be seen in Figure 2, the datapoint 201 has a corresponding feature availability 217. Each feature 203-207 has a corresponding feature availability. So, feature availability FA2 219 is associated with Feature 1 203, feature availability FA2 221 is associated with Feature 2 205, and feature availability FAn 223 is associated with Feature n 207. The feature availability is unique to the specific datapoint and may be different for each datapoint.

The feature availability has a value of either 1 (the feature is present for this particular datapoint), or 0 (the feature is not present for this particular datapoint). As outlined above, features may be missing for certain datapoints. This may be, for instance, through the data in the dataset 111 comprising data from many different third parties.

The feature importance may have a value between 1 and 0. A feature having a feature importance value of 1 is indicative of said feature having a greater influence, i.e., greater importance on the machine learning model outcome than that of a feature having a feature importance value of 0. The feature importance may vary between 1 and 0. For instance, it may be 0, 0.1, 0.2, 0.3, 0.4, 0.5, 0.6, 0.7, 0.8, 0.9, 1.

The feature availability and feature importance are used to determine the noise level of each data point, as will be further explained below.

Referring back to Figure 1, the dataset 111 is input into the noise calculator module 103. If a feature availability and feature importance are not already assigned to the datapoints within the dataset 111 then the noise calculate module 103 will assign feature availability and feature importance to the datapoint. In other arrangements, one or both of the feature availability and feature importance may already be assigned to the dataset.

The feature availability is assigned to the datapoint as 1 for features that are present and 0 where features are missing. The feature importance is assigned to the datapoint as 1 for all features at the start of the training process as is not clear what the importance of the features are.

The noise calculator module 103 then assigns a noise level to each datapoint of the dataset 111. The noise level of the datapoint is assigned based on the feature importance and the feature availability assigned to that data point, as can be seen from Figure 2 at step 225. The noise level that is assigned (i.e. determined) may be higher if a lot of features are unavailable and even more so if a lot of features that are unavailable are ones that have a high feature importance.

The noise level for a datapoint may be determined as:

$$Noise\ level\ (\%) = [\ 1 - \sum_{i=1}^{n}(FAi * FIi)/\sum_{i=1}^{n}(FIi)] * 100$$

wherein n is the number of features, $i = 1, 2, 3, \ldots n.$, $FAi$ is the feature availability for feature $i$, and $FIi$ is the feature importance for feature $i$. The noise level is a percentage having a value of between 0% and 100%.

Once the noise level of each datapoint has been determined the data points are categorised by the data categorisation module 107. The data categorisation module 107 is configured to categorise the data into data subsets based on the level of noise. As can be seen in Figure 1, the data is categorised into one of 6 data subsets. Data subset 113 holds data points with less than 10% noise. Data subset 115 holds data points with between 10% and 20% noise. Data subset 117 holds data points with between 20% and 30% noise. Data subset 119 holds data points with between 30% and 40% noise. Data subset 121 holds data points with between 40% and 50% noise. Data subset 123 holds data points with greater than 50% noise. In this way, the data points are put into the appropriate category of subset. Although 6 subsets are shown in Figure 1 it would be appreciated that various different numbers of subsets may be used, with different thresholds than the percentage thresholds shown in Figure 1.

Once the data points of the data set 111 have been allocated into data subsets 113-123 each of the data subsets are used to train a machine learning model. Each data subset 113-123 is used to train a different machine learning model. As can be seen from Figure 1, training module 109 performs the step of training the machine learning models. Model 1 125 is trained on the data with less than 10% noise. Model 2 127 is trained on the data with 10% to 20% noise. Model 3 129 is trained on the data with 20% to 30% noise. Model 4 131 is trained on the data with 30% to 40% noise. Model 5 133 is trained on the data with 40% to 50% noise. Model 6 135 is trained on the data with greater than 50% noise.

Prior to the training, the machine learning model that is trained on each data subset may be the same (or in some arrangements they may be different). However, as each machine learning model is then trained on a different data subset the trained machine learning models may then differ from each other as a result of the training. Preferably, the machine learning is supervised machine learning. Any type of machine learning algorithm may be used that enables a feature importance list to be produced. For instance, this may be any of support vector machine (SVM), Linear/Logistic Regression, Decision Tree, or tree-based algorithms such as Random forest, or XGboost.

After having been trained on data subsets 113-123 the performances of the trained machine learning models 125 - 135 are then assessed by the tuning module 105. The validation is carried out on a dataset with a known value. During this validation it can then be determined for each machine learning model 125-135 how close the prediction by each model is to the known (expected) value. A validation process is carried out for each of Models 1-6 125-135.

If the performance of any of machine learning Models 1-6 125-135 is not within the desired range of the expected value then a tuning process will be carried out as will be explained below. For instance, it may be 1%, 2%, 5%, 10%, for example. In other arrangements the desired range may be the predetermined value (i.e. they must match).

If any of the machine learning Models 1-6 125-135 are within the desired range then that machine learning model may be output as output model(s) 137, and as described further below. The output machine learning model(s) may be used to make predictions as will be explained further below.

The tuning process, carried out by tuning module 105, involves recalculating the feature importance of each of the features of the datapoints of the data subset which was used to train the machine learning model whose performance is not within the desired range. After the machine learning models have been initially trained it may be determined that the originally assigned feature importance are not correct. For instance, it may be determined that certain features are more important for the machine learning models output than others, for instance, in making accurate predictions. The updated feature importance may be determined from the trained models 125-135. This updated feature importance may be determined from an average value of the feature importance value determined from each of models 125-135 (i.e., models 1 to 6).

Once the updated feature importance is determined an updated noise level is then determined for each datapoint by the noise calculator module 103, with the updated feature importance. The determining of an updated noise level is carried out as set out above for the initial determination of noise level. These data points are then re-classified into subsets 113-123, as set out above, based on the updated noise level. The subsets are the same ranges/thresholds as used in the initial classification as set out above. However, one or more of the datapoints may now have a noise level that means that they are classified in a different data subset than the subset that they were initially classified within. For instance, a datapoint prior to the initial training may have a noise level of 18% and thus be classified with the Data in the 10% to 20% Noise data subset 115. However, after the training and after the updated noise level is calculated the same data point may now have a noise level of 25% and thus be classified with the Data in the 20% to 30% Noise data subset 117. This dynamic nature of the movement of the datapoints between training iterations helps improve the machine learning models that are output.

The recalculation of the noise level of each datapoint, and subsequent reclassification, is preferably only the data points that are associated with the data subset or subsets that the machine learning model was trained on that did not meet the required performance. However, in some arrangements, it may be for every data points that are associated with every data subset.

Once the data points have been re-classified, the machine learning models are then retrained by the training module 109, as set out above for the initial training step. This re-training is carried out for the machine learning models 125-135 that did not meet the required performance after the initial training. The re-training, as it is done on the updated data subsets 113-123, provides different machine learning models 125-135 as they have been trained on data that has changed since the initial training. Ideally this updated data will be better classified into the correct subsets 113-123 to provide a better trained machine learning model.

The machine learning models 125-135 from the re-training are then analysed for their performance by the tuning module 105, in the same manner as set out above for the initial machine learning models, by validating their output on the validation dataset and determining for each re-trained machine learning model 125-135 how close the output of the model is to the expected value. The re-trained machine learning model performance is then compared to the performance of the previous machine learning model prior to the re-training. For example, the performance of model 1 125 after the initial training is compared to the performance of model 1 125 after the re-training (if model 1 125 was retrained). If it is determined that the performance of the machine learning model after the re-training is better than the initial machine learning model, the re-trained machine learning model is assigned as the current best performing machine learning model. If that is not the case, the re-trained machine learning model is discarded and the machine learning model prior to the re-training is output as the output 137, albeit with a further optional step as will be explained below.

If the performance of any of the re-trained models 125-135 is not within the desired range of the expected value, then a tuning process will be carried out again and further iterations of noise calculation, re-classification of data subsets, re-training and tuning as outlined above, will be carried out until the re-trained models 125-135 are within the desired range of the expected value.

If any of the re-trained models 125-135 are within the desired range, then that specific machine learning model may be output as output model(s) 137. The output model(s) may be used to make predictions as will be explained below.

As outlined above, a further optional step may be performed if the machine learning model prior to the re-training is better than the machine learning model performance after the re-training. The step may involve adding a small random number to a feature importance list of the features of the dataset, performing the re-classification, retraining and tuning/validation to determine if a better performance can be provided. If such an improvement is provided then this improved machine learning model may comprise the output 137, otherwise, the machine learning model prior to the optional step is the output model 137. Advantageously, in this way, even if it is initially determined that the best performing machine learning model has been found through the training and validation by adding on random numbers to the feature importance list it can be determined if the true optimum machine learning model has been arrived at. If it is determined that through adding the random numbers that the performance is not improved the machine learning model with the small random number is discarded and the machine learning model prior to adding the random numbers is taken as the final trained model. If the performance is improved, the improved machine learning model is taken as the final model.

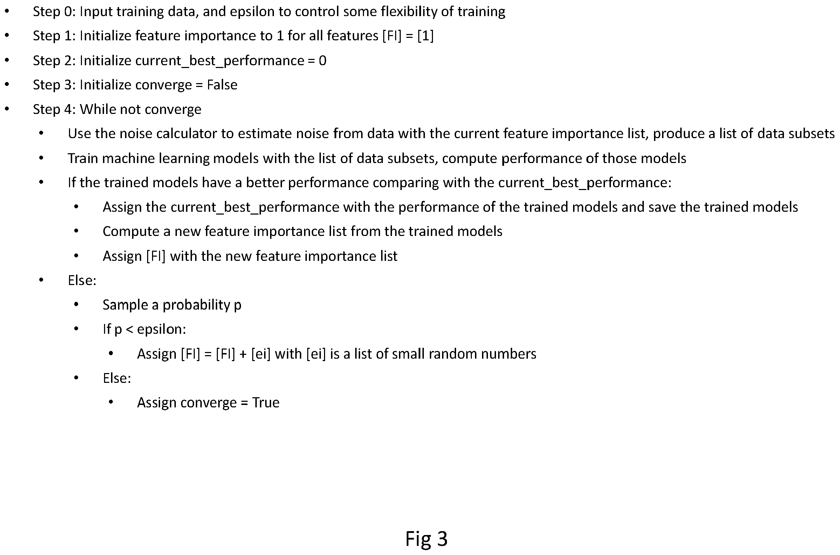

Figure 3 an exemplary algorithm according to an aspect of the present invention for training and tuning the machine learning model as may be used in a method as explained above in relation to Figure 1 and 2.

At step 0 - Input training data (e.g. is input as data 111 as described above), and a value epsilon which is provided to control some flexibility of training.

At Step 1 - Initialize feature importance to 1 for all features [FI] = [1].

At Step 2: Initialize current_best_performance = 0

At Step 3: Initialize converge = False.

At Step 4: While not converge:

- The noise calculator is used to estimate noise from data with the current feature importance list, produce a list of data subsets.
- The machine learning models are then trained with the list of data subsets, and the performance of those models computed.
- If the trained models have a better performance compared with the current_best_performance:

  - Assign the current_best_performance with the performance of the trained models and save the trained models
  - Compute a new feature importance list from the trained models
  - Assign [FI] with the new feature importance list

- Else:

  - Sample a probability p

- If p < epsilon:

  - Assign [FI] = [FI] + [ei] with [ei] is a list of small random numbers

- Else:

  - Assign converge = True

The above, as shown in Figure 3 is one example of how this method may be implement as an algorithm.

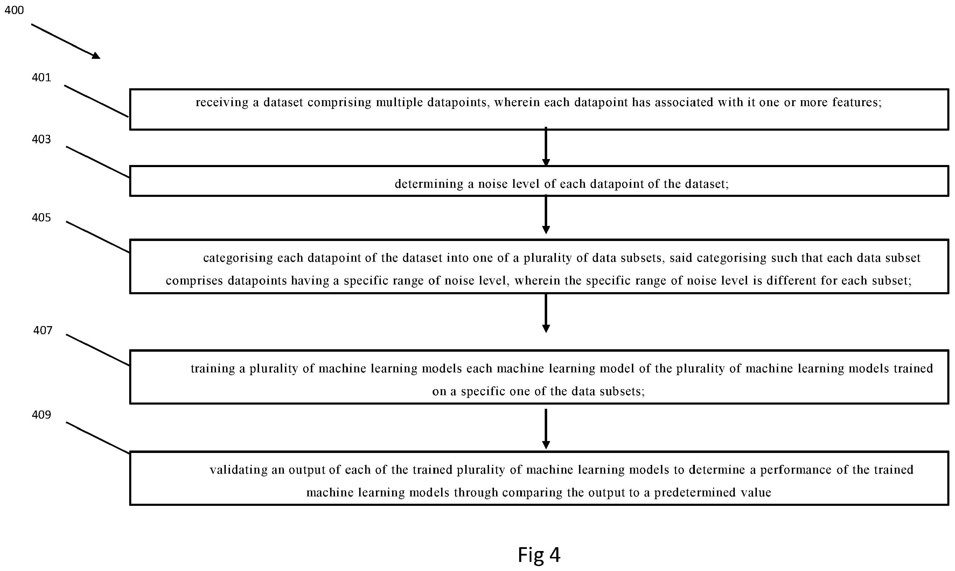

Figure 4 shows a flow diagram of a computer implemented method 400 for training and validating a machine learning model, according to an aspect of the present invention.

At step 401 the method involves, receiving a dataset comprising multiple datapoints, wherein each datapoint has associated with it one or more features.

At step 403 the method involves, determining a noise level of each datapoint of the dataset.

At step 405 the method involves, categorising each datapoint of the dataset into one of a plurality of data subsets, said categorising such that each data subset comprises datapoints having a specific range of noise level, wherein the specific range of noise level is different for each subset.

At step 407 the method involves, training a plurality of machine learning models each machine learning model of the plurality of machine learning models trained on a specific one of the data subsets.

At step 409 the method involves, validating an output of each of the trained plurality of machine learning models to determine a performance of the trained machine learning models through comparing the output to a predetermined value.

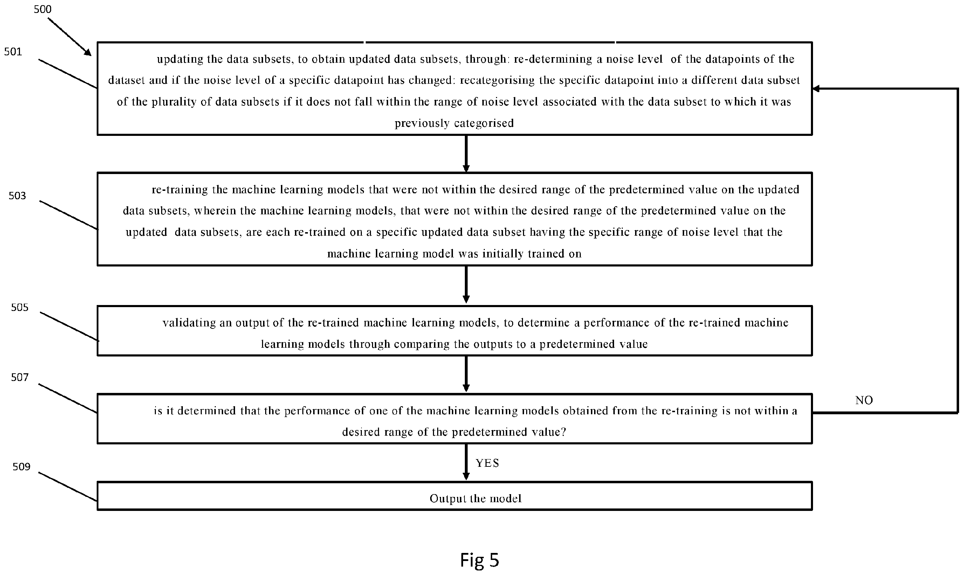

Figure 5 shows a flow diagram of a computer implemented method for re-training and validating a machine learning model, according to an aspect of the present invention.

At step 501 the method involves, updating the data subsets, to obtain updated data subsets, through: re-determining a noise level of the datapoints of the dataset and if the noise level of a specific datapoint has changed: re-categorising the specific datapoint into a different data subset of the plurality of data subsets if it does not fall within the range of noise level associated with the data subset to which it was previously categorised. This may be performed after step 409 of Figure 4.

At step 503 the method involves, re-training the machine learning models that were not within the desired range of the predetermined value on the updated data subsets, wherein the machine learning models, that were not within the desired range of the predetermined value on the updated data subsets, are each re-trained on a specific updated data subset having the specific range of noise level that the machine learning model was initially trained on.

At step 505 the method involves, validating an output of the re-trained machine learning models, to determine a performance of the re-trained machine learning models through comparing the outputs to a predetermined value.

At step 507 the method involves, it is determined whether the performance of one of the machine learning models obtained from the re-training is not within a desired range of the predetermined value? If no, then then the method starts again at step 501. If yes, then the model is output at step 509.

Once the machine learning models are output as one machine learning model for each data subset range (e.g., output model 137 and step 509),, then they can be used on real data that is to be assessed. This may be the end data that the model is intended to be used on, for instance, to make predictions.

The data to be assessed may be made up of a number of data points with different features as described in relation to dataset 111. Initially the noise level of each data point of the data to be assessed will be determined by noise calculator module 103. The feature importance for each feature will already be known from the training when the machine learning models were trained. Each data point of the data to be assessed will then be categorised into subset (the subsets having the same thresholds as when the machine learning models were trained). The corresponding machine learning model will then be applied to each data subset. So, taking the example in Figure 1, the machine learning model 1 125 that was trained on data with less than 10% noise will be applied to the data subset having datapoints of the data to be assessed having less than 10% noise, for example. This will be carried out for each data subset. A number of different outputs and/or predictions may be provided (i.e., one from each subset) from applying the different machine learning models to each of the data subsets. Advantageously, in this way improved predictions can be obtained when compared to using models that are trained on data having various amounts of noise within the training dataset.

Alternatively, the dataset to be assessed may comprise only a single data point from which a prediction is required. The noise level of the single data point is determined and it is categorised into the appropriate data subset (albeit a subset containing only this single data point). The appropriate trained machine learning model that has been trained on that level of noise (of that subset) is then applied to the data point to obtain a prediction. This approach may then be applied to other data points in this manner so that a prediction from each data point can be determined.

One such use may be based on network data to determine the presence of a network security threat in a network. The network security threat may be a fraudulent event. For instance, the data to be assessed may comprise many different transactions making up the datapoints. Features associated with the transactions may include amount, time, location of the transaction or other metadata associated with the transaction. The machine learning model may be used to predict a network security threat in this data. Once this has been detected corrective actions can be carried out. This may include blocking the transaction, or reversing the transaction. Alternatively, or in addition, it may involve alerting the cardholder, issuer, or a different entity, to the presence of the threat.

Other uses may include for credit risk scoring, merchant utilization estimation, customer churn prediction, or other predictions that may be carried out on transaction data. Or any type of problem that can be solved by supervised machine learning.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

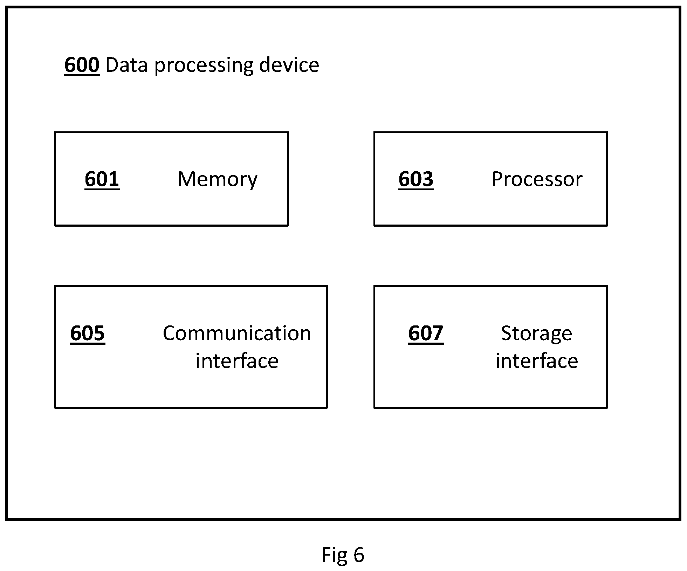

Similarly, any steps of any of the methods described herein may be performed by data processing devices. By way of example, Figure 6 shows in schematic form a data processing device 600 that is suitable for performing the functions of server 101, or any of the modules therein. The data processing device 600 may automatically perform any of the methods described herein.

Data processing device 600 includes a processor 603 for executing instructions. Instructions may be stored in a memory 601. Processor 603 may include one or more processing units (e.g., in a multi-core configuration) for executing instructions. The instructions may be executed within a variety of different operating systems on the data processing device 600, such as UNIX, LINUX, Microsoft Windows®, etc. More specifically, the instructions may cause various data manipulations on data stored in memory 601 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 603 is operatively coupled to a communication interface 605 such that data processing device 600 can communicate with a remote device, such as another data processing device of the system. For example, communication interface 605 may receive communications from another member of the system.

Processor 603 may also be communicatively coupled to a storage device such as a database, depending on the function of data processing device 600 within the context of the system. The storage device is any computer-operated hardware suitable for storing and/or retrieving data, where in the case of a secure storage medium the data is stored and retrieved securely.

The storage database may store the datasets, for instance, and it can be external to data processing device 600 and located remotely. Alternatively, it can be integrated in data processing device 600. For example, data processing device 600 may include memory 601 as one or more hard disk drives acting as a storage database. Alternatively, where the storage database is external to data processing device 600, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud based environment.

Processor 603 can be operatively coupled to the storage device (storage database) via a storage interface 607. Storage interface 607 is any component capable of providing processor 603 with access to the storage device. Storage interface 607 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 603 with access to the storage device.

Memory 601 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and submodules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

In other arrangements, the feature importance may be assigned a value different as described in the above examples. For instance, in an alternative arrangement where the dataset contains datapoints with n different features the feature importance may be any integer value between 1 and $n$. A feature importance having a low value may be indicative as having a greater influence, i.e., greater importance, on the machine learning model outcome than those having a higher value feature importance.

Although a specific equation is shown above for calculating the noise level, the invention is not limited to this equation. Any other method of determining the noise level may be used.

It is stated above that the feature availability is assigned to the dataset as 1 for features that are present and 0 where features are missing. The feature importance is assigned to the dataset as 1 for all features at the start of the training process as it is not clear what the importance of the features are. However, this is just one example. In other arrangements, any value of feature availability or feature importance may be assigned prior to the initial training.

Although it is shown to categorise the data into 6 subsets in the above-described examples this is not necessarily always the case. There may be any number of subsets. For instance, 2, 3, 4, 5, 6, 7, 8 or more subsets. In addition, the subsets may not necessarily use the same thresholds as outlined above, they may for instance, be in increments of 10%, 25% or any other increments. Alternatively, or in addition, the data subsets may cover equal thresholds. This may be for instance, 10 subsets each categorising noise in a 10% increment.

In the above, it is described that the tuning process, carried out by tuning module 105, involves recalculating the feature importance of each of the features of the datapoints of the data subset which was used to train the machine learning model whose performance is not within the desired range. However, the tuning process (and subsequent re-training) may be carried out for all of the machine learning models (even those that the performance is within the desired range) if just one of the machine learning models has a performance not within the desired range.

The re-training, re-classification, re-validation, and optional step of adding random numbers, may be applied to any, or all of the machine learning models.

In the above examples, server 101 is shown as holding each of the modules. However, in other arrangements, a plurality of servers may be used, in communication with each other, each server holding one or more of the modules. These servers may be fixed location servers or cloud servers.

**Claims**

1. A computer implemented method for training and validating a machine learning model, the method comprising;

   receiving a dataset comprising multiple datapoints, wherein each datapoint has associated with it one or more features;
   determining a noise level of each datapoint of the dataset;
   categorising each datapoint of the dataset into one of a plurality of data subsets, said categorising such that each data subset comprises datapoints having a specific range of noise level, wherein the specific range of noise level is different for each subset;
   training a plurality of machine learning models each machine learning model of the plurality of machine learning models trained on a specific one of the data subsets;
   validating an output of each of the trained plurality of machine learning models to determine a performance of the trained machine learning models through comparing the output to a predetermined value;
   if from said comparing it is determined that the performance of any of the trained and validated machine learning models are not within a desired range of the predetermined value:

      i) updating the data subsets, to obtain updated data subsets, through:

re-determining a noise level of the datapoints of the dataset; and
if the noise level of a specific datapoint has changed: recategorising the specific datapoint into a different data subset of the plurality of data subsets if it does not fall within the range of noise level associated with the data subset to which it was previously categorised;

ii) re-training the machine learning models that were not within the desired range of the predetermined value on the updated data subsets, wherein the machine learning models, that were not within the desired range of the predetermined value on the updated data subsets, are each re-trained on a specific updated data subset having the specific range of noise level that the machine learning model was initially trained on;
iii) validating an output of the re-trained machine learning models, to determine a performance of the re-trained machine learning models through comparing the outputs to a predetermined value;

if from said comparing it is determined that the performance of one of the machine learning models obtained from the re-training is not within a desired range of the predetermined value repeating steps i) to iii).

2. The computer implemented method of claim 1, wherein determining the noise level of a datapoint is based on the feature availability of each feature of the data point, and/or the feature importance.

3. The computer implemented method of claim 1 or claim 2, wherein the method further comprises: assigning a feature importance to each feature prior to the initial training, and after the training: computing an updated feature importance for each feature based on the output of each of the plurality of machine learning models.

4. The computer implemented method of any preceding claim, wherein for n features, the noise level of a datapoint is determined as

$$Noise\ level\ (\%) = [\ 1 - \sum_{i=1}^{n}(FAi * FIi)/ \sum_{i=1}^{n}(FIi)] * 100$$

wherein $n$ is the number of features, $i = 1, 2, 3, ....n,$ where $FAi$ is the feature availability for feature i, and $FIi$ is the feature importance for feature $i$.

5. The computer implemented method of any preceding claim, wherein the method further comprises: if upon said comparing it is determined that the performance of any of the trained and validated machine learning models are within a desired range of the predetermined value:

applying at least one of the plurality of trained machine learning models to a dataset to be assessed;
providing an output from the at least one of the plurality of trained machine learning models;
taking action based on the output.

6. The computer implemented method of claim 5, wherein applying at least one of the plurality of trained machine learning models to a dataset to be assessed further comprises:

determining a noise level of each datapoint of the dataset to be assessed;
categorising each datapoint of the dataset to be assessed into one of a plurality of data subsets, said categorising such that each data subset comprises datapoints having a specific range of noise level, wherein the specific range of noise level is different for each subset;
applying one of the plurality of trained machine learning models to a specific one of the data subsets to provide an output.

7. The computer implemented method of any preceding claim, wherein the dataset is a dataset relating to network activity, and the machine learning models are for detecting fraudulent events in the network, wherein the method further comprises:

applying at least one of the plurality of trained machine learning models to a dataset to be assessed to determine the presence of fraudulent events;
providing an output from the at least one of the plurality of trained machine learning models the output indicating the detection of a fraudulent event in a network from the dataset to be assessed;
taking corrective action based on the output.

8. The computer implemented method of claim 7, wherein taking corrective action may comprise any one of: taking action to prevent the fraudulent event from happening again, alerting a third party of the fraudulent event, and reversing the outcome of the fraudulent event.

9. The computer implemented method of any preceding claim, wherein validating comprises using a validation dataset to provide an output of the machine learning model and comparing the output provided by the machine learning model to predetermined value.

10. The computer implemented method of any preceding claim, wherein validating an output of the re-trained machine learning models further comprises:
comparing to the performance of the machine learning model prior to the retraining, and if the output of the re-trained model is closer to the predetermined value than the output of the trained model carrying out steps i) to iii), else taking the trained machine learning model prior to the re-training as a final trained model.

11. The computer implemented method of claim 10, wherein taking the trained machine learning model prior to the re-training as a final trained model further comprises:

adding a random number to a feature importance list of the features of the dataset;
retraining the machine learning model on the updated dataset;
validating an output of the machine learning model obtained from the retraining after adding the random number, to determine a performance of the re-trained machine learning model after adding the random number through comparing the output to a predetermined value;
if the output of the re-trained model after adding the random number is closer to the predetermined value than the output of the model prior to adding the random number taking the re-trained model after adding the random number as the final trained model.

12. The computer implemented method of any preceding claim, wherein there are the same number of plurality of data subsets as there are plurality of machine learning models.

13. A system for training and validating a machine learning model, the system comprising a processor configured to carry out the method of claim 1, or any claim dependent thereon.

14. A non-transitory computer-readable medium comprising instructions which, when executed by a computer, cause the computer to carry out the method of claim 1 or any claim dependent thereon.

15. A computer program product comprising instructions which, when the program is executed by a computer, cause the computer to carry out the method of claim 1 or any claim dependent thereon.

Fig 1

Fig 2

- Step 0: Input training data, and epsilon to control some flexibility of training
- Step 1: Initialize feature importance to 1 for all features [FI] = [1]
- Step 2: Initialize current_best_performance = 0
- Step 3: Initialize converge = False
- Step 4: While not converge
  - Use the noise calculator to estimate noise from data with the current feature importance list, produce a list of data subsets
  - Train machine learning models with the list of data subsets, compute performance of those models
  - If the trained models have a better performance comparing with the current_best_performance:
    - Assign the current_best_performance with the performance of the trained models and save the trained models
    - Compute a new feature importance list from the trained models
    - Assign [FI] with the new feature importance list
  - Else:
    - Sample a probability p
    - If p < epsilon:
      - Assign [FI] = [FI] + [ei] with [ei] is a list of small random numbers
    - Else:
      - Assign converge = True

Fig 3

400

401 — receiving a dataset comprising multiple datapoints, wherein each datapoint has associated with it one or more features;

403 — determining a noise level of each datapoint of the dataset;

405 — categorising each datapoint of the dataset into one of a plurality of data subsets, said categorising such that each data subset comprises datapoints having a specific range of noise level, wherein the specific range of noise level is different for each subset;

407 — training a plurality of machine learning models each machine learning model of the plurality of machine learning models trained on a specific one of the data subsets;

409 — validating an output of each of the trained plurality of machine learning models to determine a performance of the trained machine learning models through comparing the output to a predetermined value

Fig 4

```
            500

501                ┌─────────────────────────────────────────────────────────────────────────────────────────────────┐
                   │  updating the data subsets, to obtain updated data subsets, through: re-determining a noise level  of the datapoints of the  │
                   │  dataset and if the noise level of a specific datapoint has changed: recategorising the specific datapoint into a different data subset  │
                   │  of the plurality of data subsets if it does not fall within the range of noise level associated with the data subset to which it was  │
                   │                                          previously categorised                                         │
                   └─────────────────────────────────────────────────────────────────────────────────────────────────┘
                                                              │
503                ┌─────────────────────────────────────────────────────────────────────────────────────────────────┐
                   │  re-training the machine learning models that were not within the desired range of the predetermined value on the updated  │
                   │  data subsets, wherein the machine learning models, that were not within the desired range of the predetermined value on the  │
                   │  updated  data subsets, are each re-trained on a specific updated data subset having the specific range of noise level that the  │
                   │                                machine learning model was initially trained on                                │
                   └─────────────────────────────────────────────────────────────────────────────────────────────────┘
                                                              │
505                ┌─────────────────────────────────────────────────────────────────────────────────────────────────┐
                   │  validating an output of the re-trained machine learning models, to determine a performance of the re-trained machine  │
                   │                  learning models through comparing the outputs to a predetermined value                  │
                   └─────────────────────────────────────────────────────────────────────────────────────────────────┘
                                                              │
507                ┌─────────────────────────────────────────────────────────────────────────────────────────────────┐          NO
                   │  is it determined that the performance of one of the machine learning models obtained from the re-training is not within a  │
                   │                          desired range of the predetermined value?                          │
                   └─────────────────────────────────────────────────────────────────────────────────────────────────┘
                                                              │  YES
509                ┌─────────────────────────────────────────────────────────────────────────────────────────────────┐
                   │                                           Output the model                                          │
                   └─────────────────────────────────────────────────────────────────────────────────────────────────┘
```

Fig 5

**600** Data processing device

| | |
|---|---|
| **601**     Memory | **603**     Processor |
| **605**     Communication interface | **607**     Storage interface |

Fig 6

Europäisches
Patentamt

European
Patent Office

Office européen
des brevets

## EUROPEAN SEARCH REPORT

Application Number

EP 23 18 6289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUE ZHAO ET AL: "ADMoE: Anomaly Detection with Mixture-of-Experts from Noisy Labels", ARXIV.ORG, CORNELL UNIVERSITY LIBRARY, 201 OLIN LIBRARY CORNELL UNIVERSITY ITHACA, NY 14853, 22 November 2022 (2022-11-22), XP091375919, * abstract; sections 3.1, 3.2, 3.3, 3.3.2, 4.1 Equation 3; figure 2 * | 1-15 | INV. G06N3/045 G06N3/09 |
| A | AYA ABDELSALAM ISMAIL ET AL: "Interpretable Mixture of Experts", ARXIV.ORG, CORNELL UNIVERSITY LIBRARY, 201 OLIN LIBRARY CORNELL UNIVERSITY ITHACA, NY 14853, 25 May 2023 (2023-05-25), XP091519659, * abstract; sections 2, 4; figure 2 * | 1-15 | |
| A | GE ZONGYUAN ET AL: "Fine-grained classification via mixture of deep convolutional neural networks", 2016 IEEE WINTER CONFERENCE ON APPLICATIONS OF COMPUTER VISION (WACV), IEEE, 7 March 2016 (2016-03-07), pages 1-6, XP032904342, DOI: 10.1109/WACV.2016.7477700 [retrieved on 2016-05-23] * abstract, sections 2, 3, 4; figure 2 * | 1-15 | **TECHNICAL FIELDS SEARCHED (IPC)**<br><br>G06N |

The present search report has been drawn up for all claims

| Place of search | Date of completion of the search | Examiner |
|---|---|---|
| The Hague | 15 January 2024 | Tebbal Barracosa, B |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)